# EUROPEAN PATENT SPECIFICATION

(11) **EP 4 443 577 B1**
(45) Date of publication and mention of the grant of the patent: **23.09.2026**
(21) Application number: 22901742.1
(22) Date of filing: 30.11.2022
(51) Int. Cl.: H01M 50/538, H01M 10/0587, H01M 10/04, H01M 10/42

(54) **ELECTRODE ASSEMBLY, CYLINDRICAL BATTERY CELL, AND BATTERY PACK AND VEHICLE COMPRISING SAME**
ELEKTRODENANORDNUNG, ZYLINDRISCHE BATTERIEZELLE UND BATTERIEPACK UND FAHRZEUG DAMIT
ENSEMBLE ÉLECTRODE, ÉLÉMENT DE BATTERIE CYLINDRIQUE, ET BLOC-BATTERIE ET VÉHICULE LE COMPRENANT

(30) Priority: 30.11.2021 KR 20210168017; 25.04.2022 KR 20220051015
(43) Date of publication of application: 09.10.2024
(60) Divisional application: 26199315.8
(73) Proprietor: LG Energy Solution, Ltd., Seoul 07335 (KR)
(72) Inventor: YUN, Su Hyun, Daejeon 34122 (KR); JUNG, Bum Young, Daejeon 34122 (KR); LEE, Kwan Hee, Daejeon 34122 (KR); KIM, Jong Gu, Daejeon 34122 (KR)
(74) Representative: Goddar, Heinz J.
(86) International application number: PCT/KR2022/019153
(87) International publication number: WO 2023/101384

(56) References cited:
- WO-A1-2017/174374
- JP-A- 2004 030 938
- JP-A- 2011 216 403
- JP-A- 2015 517 189
- JP-A- 2021 089 857
- KR-A- 20150 000 159
- KR-A- 20200 041 625
- US-A1- 2021 111 436
- US-A1- 2021 344 033

## Description

### [Technical Field]

The present disclosure relates to an electrode assembly, and a cylindrical battery cell, and a battery pack and a vehicle comprising the same.

### [Background Art]

US 2021/0344033 A1 relates to a cylindrical electrode assembly in which a first electrode and a second electrode are wound in a state where the first electrode and the second electrode are stacked with a separator therebetween, wherein the first electrode includes a first electrode coated portion, the first electrode coated portion having a first active material coated on a surface of the first electrode, wherein the second electrode includes a second electrode coated portion having a second active material coated on a surface of the second electrode a second electrode uncoated portion on which no active material is coated, the second electrode uncoated portion being at one axial end portion of the second electrode and an insulating coating layer formed by coating a predetermined section from a boundary between the second electrode coated portion and the second electrode uncoated portion toward an end of the second electrode uncoated portion with an insulation material and the second electrode uncoated portion bends at a predetermined bent position to a radial direction of the electrode assembly, wherein the insulating coating layer is extended axially further outward than the axial end of the separator, wherein the bent position is disposed axially further outward than the end of the separator, wherein the insulating coating layer covers at least a part of the section from the boundary between the second electrode coated portion and the second electrode uncoated portion toward the bent position of the second electrode uncoated portion. WO 2017/174374 A1 relates to an energy storage device having a positive electrode sheet and a negative electrode sheet which are stacked together with a separator interposed therebetween. KR 2015 0 000 159 A relates to an electrode assembly and a secondary battery including the same to reduce the heat generated in the negative electrode core tab.

To maximize efficiency of collecting current, a jelly roll-type electrode assembly, in which a positive electrode tab and a negative electrode tab are respectively extended vertically along the height direction of a battery can, can be applied to a cylindrical secondary cell.

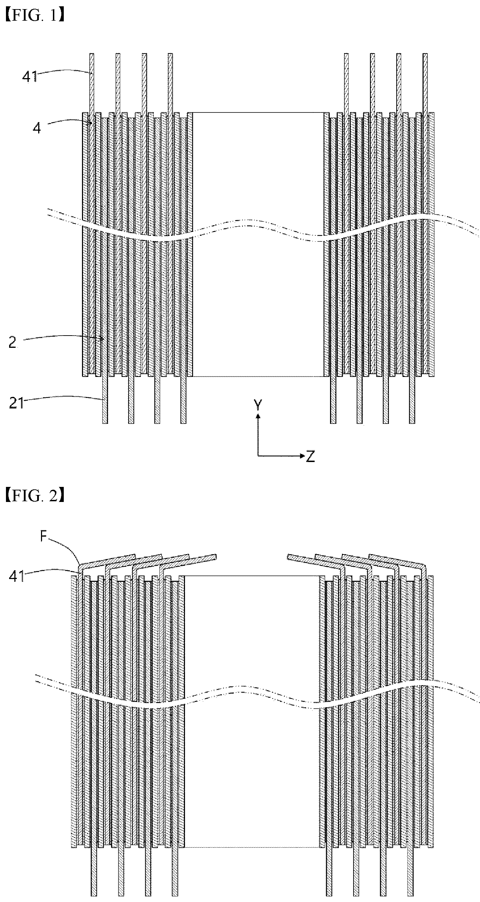

In the case of a jelly roll-type electrode assembly surrounding and winding electrode about a winding center, a first electrode uncoated portion 21 is exposed at an one axial end of the electrode assembly, and a second electrode uncoated portion 41 is exposed at the other axial end of the electrode assembly, as illustrated in FIG. 1. Herein, it is assumed that the first electrode 2 is a positive electrode while the second electrode 4 is a negative electrode, although the reverse also applies.

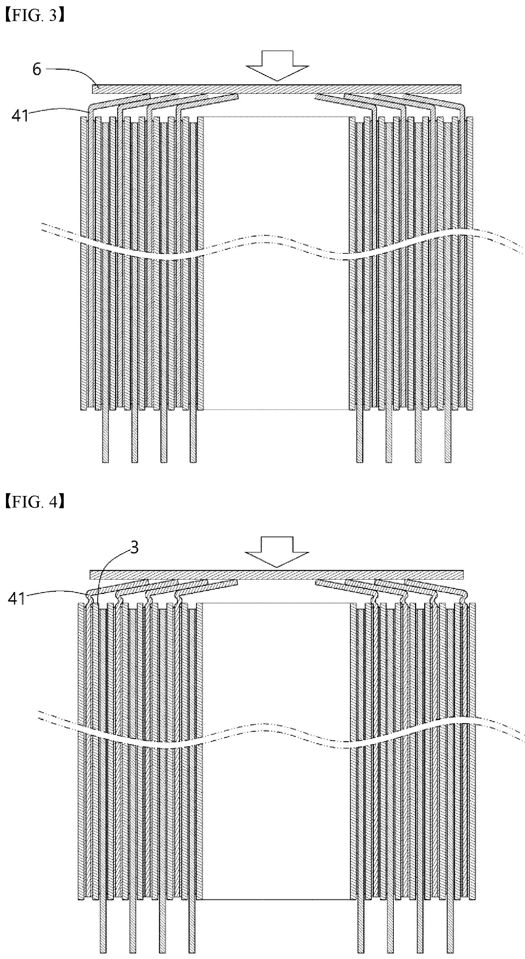

In recent years, a cell structure, in which an uncoated portion exposed at the end of an electrode assembly is radially bent to constitute a planar surface as illustrated in FIG. 2, and a current collecting plate 6 welds onto bent uncoated portions as illustrated in FIG. 3, has been developed.

However, while a second electrode current collecting plate 6 is pressed against bent second electrode uncoated portions 41 to weld to the second electrode uncoated portions 41, the base end of the second electrode uncoated portion 41 is likely to be buckled, as illustrated in FIG. 4. At this time, even if a separator 3 is interposed between a first electrode 2 and a second electrode 4, the second electrode uncoated portion 41 contacts the first electrode 2 adjacent to the second electrode uncoated portion 41 and causes a short circuit, due to buckling.

Further, while the second electrode uncoated portion 41 welds to the second electrode current collecting plate 6, heat from welding may reach the separator of the electrode assembly and deform the separator.

In practical use, a cylindrical secondary cell is oriented so that its central protruding positive terminal faces upward, and the can serves as the negative electrode. The positive electrode tab connected to the one axial end of a jelly roll-type electrode assembly continues to face upward when the electrode assembly is distributed and used.

In other words, the other axial end of the electrode assembly faces downward. Thus, the second electrode uncoated portions 41 continues to be affected by an axial load in practical use, not only when the second electrode uncoated portions 41 is pressed for welding. In particular, since the axial load applied in practical use affects the second electrode uncoated portion 41 bent and welded, axially extended second electrode uncoated portion disposed inside the bent portion and is vulnerable to buckling deformation.

Further, the buckling risk exists regardless of the positive-side connection method-whether by bending and welding the first electrode's uncoated region 21 or by using an electrode tab 7.

### [Description of Invention]

### [Technical Problems]

The objective of the present disclosure is to provide an electrode assembly and a battery cell comprising the same in which the strength of the base end of an uncoated portion is ensured to prevent the buckling of the base end of the uncoated portion while the uncoated portion is axially pressed by a current collecting plate.

The objective of the present disclosure is to provide an electrode assembly and a battery cell comprising the same that prevents the deformation of a separator even despite the occurrence of the buckling of the base end of an uncoated portion while the uncoated portion is axially pressed by a current collecting plate.

The objective of the present disclosure is to provide an electrode assembly and a battery cell comprising the same that prevents a short circuit even if a buckled uncoated portion contacts an electrode of the other polarity, due to the buckling of a base end of the uncoated portion while the uncoated portion is axially pressed by a current collecting plate.

The objective of the present disclosure is to provide an electrode assembly and a battery cell comprising the same that exhibit buckling resistance even under the continuous load applied to the uncoated portion by the self-weight of the battery cell.

The objective of the present disclosure is to provide an electrode assembly and a battery cell comprising the same that prevents a damage or a deformation of a separator, which is caused by heat generated while a bent uncoated portion welds.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

The invention is defined by a cylindrical electrode assembly according to claim 1.

The width of the second electrode coated portion 42 may be greater than the width of the first electrode coated portion 22, in an axial direction. Accordingly, both axial ends of the second electrode coated portion 42 may be extended axially further outward than both axial ends of the first electrode coated portion 22.

The second electrode 4 is provided with a second electrode uncoated portion 41 that is an area at one axial (widthwise) end of the second electrode 4 on which no active material is coated. A boundary between the second electrode coated portion 42 and the second electrode uncoated portion 41 is disposed axially further inward than the axial end of the separator 3.

The thickness of the second electrode 4 may be less than the thickness of the first electrode 2.

The rigidity of a material for the second electrode 4 may be less than the rigidity of material for the first electrode 2.

The first electrode 2 may constitute a positive electrode, and the second electrode 4 may constitute a negative electrode.

The first electrode 2 may be provided with a first electrode uncoated portion 21 that is an area at the other axial end of the first electrode 2 on which no active material is coated.

The second electrode uncoated portion 41's buckling resistance may be less than the first electrode uncoated portion 21's buckling resistance.

The axial length of the second electrode uncoated portion 41 may be greater than the axial length of the first electrode uncoated portion 21.

The first electrode 2 may be provided with an electrode tab 7 that welds to an area where a first active material 23 is not coated, and axially protrudes from the other side of the first electrode 2.

To solve the above-described problem, the second electrode 4 of the present disclosure is provided with an insulating coating layer 45 formed by coating a predetermined section from the boundary between the second electrode coated portion 42 and the second electrode uncoated portion 41 toward the end of the second electrode uncoated portion 41 with an insulating material.

The insulating coating layer 45 may be provided in a way that an insulation liquid is coated or an insulation tape is attached.

The insulating coating layer 45 may be axially extended further outward than the axial end of the separator 3.

The insulating coating layer 45 is thinner than the second electrode coated portion 42. Accordingly, the insulating coating layer 45 may be in light contact with the separator 3 or separated from the separator 3, while the second electrode coated portion 42 is in close contact with the separator 3.

The insulating coating layer 45 may cover a micro section 43 of the end of the second electrode coated portion 42 when covering the boundary between the second electrode coated portion 42 and the second electrode uncoated portion 41.

The thickness at which the insulating coating layer 45 is coated may be constant along the axial direction.

The thickness at which the insulating coating layer 45 is coated may not be constant in a partial section, along the axial direction.

The second electrode coated portion 42 adjacent to the boundary between the second electrode coated portion 42 and the second electrode uncoated portion 41 may be provided with a gliding portion the thickness of which decreases gradually toward the boundary. Complementarily, the thickness of the insulating coating layer 45 portion applied on the gliding portion may increase gradually toward the boundary.

The second electrode uncoated portion 41 is bend in a radial direction of the electrode assembly 1, in a predetermined position F, and the bent position F is disposed further outward than the end of the separator 3 in the axial direction.

The insulating coating layer 45 covers at least a part of the section from the boundary between the second electrode coated portion 42 and the second electrode uncoated portion 41 to the bent position F of the second electrode uncoated portion 41.

The insulating coating layer 45 does not cover the second electrode uncoated portion 41 by a predetermined gap G from the bent position F, in the axial direction.

The second electrode uncoated portion 41 may be provided with a notch part N that is formed axially inward from the end of the second electrode uncoated portion 41, and a plurality of notch parts N may be spaced from one another along a circumferential direction (a lengthwise direction) of the second electrode 4.

A portion of the second electrode uncoated portion disposed between circumferentially adjacent two notch parts N may define the notch tab T.

Circumferential lengths of the notch tabs T may be uniform. Alternatively, the circumferential lengths of the notch tabs T may increase gradually or in a stepped way, from the winding center of the electrode assembly to the outer circumference of the electrode assembly.

At the second electrode uncoated portion 41, the notch tab T may not be provided in a predetermined section at the end portion of the winding center of the electrode assembly and/or at the end portion of the outer circumference of the electrode assembly.

The notch tab T has a trapezoid shape in which a width decreases gradually from the base end toward the front end of the notch tab T. Alternatively, the notch tab T may have various shapes such as a triangle, a half circle, a half oval, a parallelogram and the like.

The bent position F may be in the base end of the notch tab T.

According to the present disclosure, an insulating coating layer 45 is formed by coating a predetermined section extending from the boundary between the second electrode coated portion 42 and the second electrode uncoated portion 41 toward the end of the second electrode uncoated portion 41 with an insulating material at the axial end of the second electrode 4 where the second electrode uncoated portion 41 is exposed.

The insulating coating layer 45 may cover a micro section of the end of the second electrode coated portion 42 when covering the boundary between the second electrode coated portion 42 and the second electrode uncoated portion 41. Accordingly, the boundary between the second electrode coated portion 42 and the second electrode uncoated portion 41 may be reinforced, and insulation in the portion may be ensured, more definitely.

The second electrode uncoated portion 41 may bend in a centripetal direction of the electrode assembly 1. At this time, the second electrode uncoated portion 41 may be provided with a bend-inducing structure N, T that can induce bending in a predetermined axial position F.

The bend-inducing structure N, T may, for example, be formed by cutting the second electrode uncoated portion 41 axially from the front end of the second electrode uncoated portion 41 over the axial section where bending of the second electrode uncoated portion 41 is required to form a notch part N and subdividing the second electrode uncoated portion 41 into notch tabs T accordingly.

Due to the bend-inducing structure N, T, the bent position F of the second electrode uncoated portion 41 may be induced.

The insulating coating layer 45 may cover at least a part of the section from the boundary between the second electrode coated portion 42 and the second electrode uncoated portion 41 to the bent position F.

The insulating coating layer 45 may be extended axially further outward than the separator 3. Accordingly, even if the base end of the second electrode uncoated portion 41 is buckled, the possibility that a short circuit between the second electrode uncoated portion 41 and the first electrode 2 with the separator 3 therebetween may be excluded.

The insulating coating layer 45 may not fully cover up to the bend-inducing structure 47 or the bent position, and may not cover a predetermined gap G. Accordingly, stress may not be delivered to the insulating coating layer 45 as a bend occurs in the bent position, damage to the insulating coating layer 45 may be prevented, and the buckling resistance of the insulating coating layer 45 is not affected.

The notch tab T may bend radially in the bent position F. The notch tab T may bend toward a centripetal direction. The notch tab T may also bend in a centrifugal direction.

Since the notch tab T bends, the surface of the tab, facing the axial direction, may weld to a second electrode current collecting plate 6. The current collecting plate 6 may weld to a bottom 301F of a battery can 301c or a cap 307. The tab surface facing the axial direction by bending the notch tab T can be welded to the second electrode current collecting plate 6. The current collecting plate 6 may be welded to either the bottom 301F of the battery can 301C or to the cap 307.

The tab surface may directly weld to the bottom 301F of the battery can 301C or the cap 307, without a current collecting plate.

The first electrode uncoated portion 21 provided in the other axial end of the first electrode 2 may be provided with a plurality of notch parts that is formed along a lengthwise direction, and portions of the first electrode uncoated portion between the plurality of notch parts may constitute notch tabs.

The notch tab of the first electrode uncoated portion 21 may bend centripetally or centrifugally and weld to a first electrode current collecting plate 5. The first electrode current collecting plate 5 may weld to an electrode terminal 301R.

The electrode tab 7 of the first electrode 2 may weld to the electrode terminal 301R.

### [Advantageous Effects]

According to the present disclosure, the base end of an uncoated portion is reinforced by an insulation coating layer, such that the buckling of the base end of the uncoated portion is prevented as the uncoated portion is axially pressed by a current collecting plate.

According to the present disclosure, even if the base end of the uncoated portion is buckled while the uncoated portion is axially pressed by the current collecting plate in the axial direction, a separator is prevented from deforming, since the thickness of the insulating coating layer is thinner than the thickness of an electrode coated portion so that the insulating coating layer is spaced from the separator to some degree.

According to the present disclosure, even if the base end of the uncoated portion buckles during axial pressing of the uncoated portion by the current collecting plate and the buckled uncoated portion contacts an electrode of the other polarity, a short circuit does not occur since the insulating coating layer is applied on the base end of the uncoated portion.

According to the present disclosure, the insulating coating layer enables the extending length of the separator that extends axially outward from the second electrode coated portion to be shortened. Accordingly, the end of the separator may be disposed axially further inward than a bent portion of a second electrode uncoated portion. Thus, heat generated during welding a bent surface of the second electrode uncoated portion to a second electrode current collecting plate or the bottom of a battery can or a cap can be prevented from affecting the end of the separator and thus deforming the separator.

A battery cell provided with the electrode assembly having the above structure ensures excellent reliability. The battery can be used as a battery for an electric vehicle that is exposed to continuous vibrations or shocks.

According to the present disclosure, a second electrode uncoated portion of a jelly roll-shaped electrode assembly is bent radially so that adjacent second electrode uncoated portions overlap. Accordingly, as the second electrode current collecting plate is pressed, the base end of the second electrode uncoated portion, reinforced by the insulation coating layer, can resist against buckling and is prevented from buckling. Further, even if the second electrode uncoated portion buckles, a short circuit between the second electrode uncoated portion and the first electrode can be prevented, since the insulating coating layer covers the buckled portion. Accordingly, reliability of a cylindrical secondary cell is enhanced.

According to the present disclosure, various different effects can be produced, and the effects are described with reference to each embodiment. Additionally, description of effects readily inferred by one having ordinary skill in the art, and the like are omitted.

### [Brief Description of Drawings]

FIG. 1 is a schematic view showing a lateral surface of an electrode assembly wound in a jelly roll shape.
FIG. 2 is a schematic view showing that an uncoated portion of the electrode assembly in FIG. 1. bends radially and constitutes a planar surface.
FIG. 3 is a view showing that a current collecting plate is pressed to weld to the planar surface in FIG. 2.
FIG. 4 is a view showing buckling of the base end of the uncoated portion, which is caused by axial pressure.
FIG. 5 is a planar view showing a positive electrode (a first electrode) used for an electrode assembly.
FIG. 6 is a planar view showing an example of a negative electrode (a second electrode) used for an electrode assembly, in the present disclosure.
FIG. 7 is a view showing a positive electrode, a negative electrode and a separator that are viewed axially before the winding of the positive electrode, the negative electrode and the separator, in the state where the positive electrode, the negative electrode and the separator are stacked.

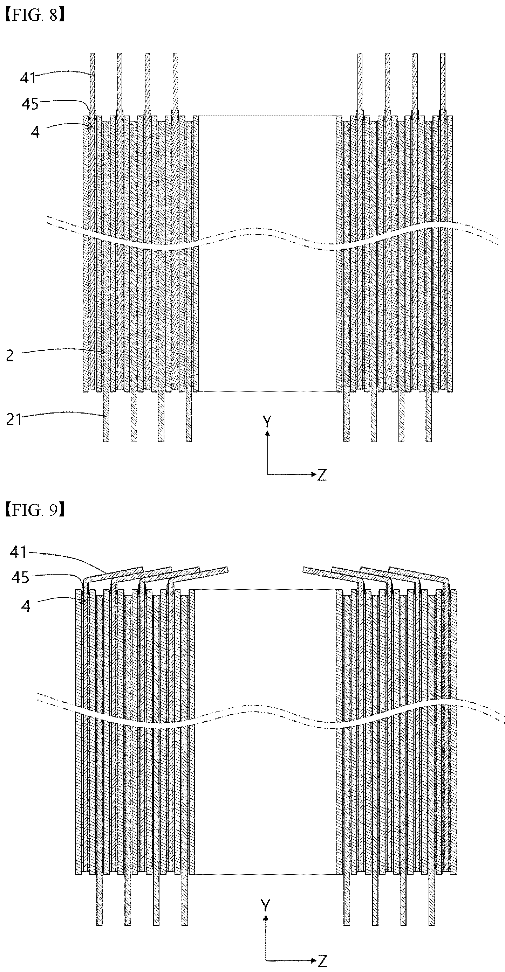

FIG. 8 is a lateral cross-sectional view showing an electrode assembly that is formed in a way that the stack in FIG. 7 is wound.
FIG. 9 is a lateral cross-sectional view showing that a negative electrode uncoated portion extending and protruding out of the axial end of the electrode assembly in FIG. 8. Bends radially inward.
FIGS. 10 and 11 are enlarged views showing examples of the negative electrode uncoated portion of an electrode assembly.
FIG. 12 is a lateral cross-sectional view showing that a current collecting plate welds to the bent uncoated portion in FIG. 9.
FIG. 13 is a planar view showing another example of a negative electrode in the present disclosure.
FIG. 14 is a lateral cross-sectional view showing an electrode assembly that is formed in a way that a stack to which the negative electrode in FIG. 13 is applied is wound.
FIG. 15 is a planar view showing another example of a positive electrode.
FIG. 16 is a lateral cross-sectional view showing an electrode assembly that is formed in a way that a stack to which the positive electrode in FIG. 15 is applied is wound.
FIG. 17 is a perspective view showing that a negative electrode uncoated portion extending and protruding out of the axial end of the electrode assembly in FIG. 14 or 16 bends radially inward.
FIG. 18 is a perspective view showing that current collecting plates weld respectively to the negative electrode uncoated portion and positive electrode uncoated portion in FIG. 17.
FIG. 19 is a perspective view showing a battery cell that is manufactured in a way that a battery can accommodates the electrode assembly in FIG. 18.
FIG. 20 is a cross-sectional view showing the battery cell in FIG. 19.
FIG. 21 is a perspective view showing that a current collecting plate welds to the positive electrode uncoated portion in FIG. 17.
FIG. 22 is a cross-sectional view showing a battery cell that is manufactured in a way that a battery can accommodates the electrode assembly in FIG. 21.
FIG. 23 is a lateral cross-sectional view showing an electrode assembly having a positive electrode to which an additional electrode tab connects.
FIG. 24 is a cross-sectional view showing a battery cell that is manufactured in a way that the battery cell accommodates the electrode assembly in FIG. 23.
FIG. 25 is a view showing a battery pack that is manufactured by using the battery cell in FIG. 19.
FIG. 26 is a view showing an electric vehicle equipped with the battery pack in FIG. 25.

### [Description of reference numerals]

1: Electrode assembly 2: First electrode (positive electrode) 20: First electrode foil 21: First electrode uncoated portion 22: First electrode coated portion 23: First active material 3: Separator 4: Second electrode (negative electrode) 40: Second electrode foil 41: Second electrode uncoated portion F: Bent position G: Gap N: Notch part T: Notch tab 42: Second electrode coated portion 43: Micro section 45: Insulating coating layer 46: Second active material 5: First electrode current collecting plate 6: Second electrode current collecting plate 7: Electrode tab 300: Battery pack 301: Battery cell 301C: Battery can 301R: Electrode terminal (rivet terminal) 301F: Bottom 302: Housing 306: Gasket 307: Cap 308: Insulator 309: Vulnerable part B: Beading part C: Crimping part V: Vehicle Y Axial direction (width direction) X Circumferential direction (lengthwise direction) Z Radial direction (tangential direction)

### [Detailed Description of Exemplary Embodiments]

The above-described aspects, features and advantages are specifically described hereafter with reference to the accompanying drawings. In the disclosure, detailed description of known technologies in relation to the subject matter of disclosure is omitted. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower potion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

Hereafter, preferred embodiments in the present disclosure are described with reference to the accompanying drawings.

In the present disclosure, a direction in which an axis as the center of the winding of a jelly roll-shaped electrode assembly 1 extends is referred to as an axial direction Y, and a direction closer to the axis (a centripetal direction) or a direction farther from the axis (a centrifugal direction) is referred to as a radial direction Z, and a direction in which the axis is surrounded is referred to as a perimeter direction (a circumferential direction) X. The axial direction Y of the electrode assembly 1 may correspond to the width direction Y of an electrode or a separator that constitutes a stack before winding, the perimeter direction X of the electrode assembly 1 may correspond to the lengthwise direction X of an electrode or a separator that constitutes a stack before winding, and the radial direction Z of the electrode assembly 1 may correspond to the normal direction of a sheet-shaped electrode or separator that constitutes a stack before winding.

A cylindrical secondary cell is manufactured in a way that an electrode assembly 1 wound in a jelly roll shape is built into a cylindrical battery can.

The electrode assembly 1 accommodated in the cylindrical battery can may be formed in a way that a sheet-shaped first electrode 2, a sheet-shaped first separator 3, a sheet-shaped second electrode 4, and a sheet-shaped second separator 3 are stacked one after another to form a stack, and then wound the stack along the lengthwise directions X of the sheets. Accordingly, the jelly roll-shaped electrode assembly 1 may be formed into a thick circular pipe with a hollow winding axis portion. That is, the lengthwise direction of the roll sheet corresponds to the circumferential direction of the cylindrical electrode assembly 1, and the width direction of the roll sheet corresponds to the axial direction of the electrode assembly 1. Additionally, the normal direction of the surface of the roll sheet corresponds to the radial direction of the electrode assembly 1.

The first electrode 2 may be a positive electrode, while the second electrode 4 may be a negative electrode. The first separator 3 and the second separator 3 may be made of the same material, and be referred to as first and second ones respectively, to distinguish between the first separator 3 and the second separator 3 depending on the positions thereof in the stack.

The first electrode 2 and the second electrode 4 may have a predetermined width in the width direction Y and be a rectangular metal foil that is extended in the lengthwise direction X. For example, the first electrode 2 may be aluminum foil, while the second electrode 4 may be copper foil.

A first active material 23 is coated on both surfaces or one surface of the first electrode 2 to constitute a first electrode coated portion 22. In the same way, a second active material 46 is coated on both surfaces or one surface of the second electrode 4 to constitute a second electrode coated portion 42. The other axial end of the second electrode 4 in the width direction Y constitutes a second electrode uncoated portion 41 to which no active material is coated.

In one embodiment, an active material is coated to both surfaces of the first electrode 2 to constitute a first electrode coated portion 22, and one axial end of the first electrode 2 in the width direction Y constitutes a first electrode uncoated portion 21 to which no active material is coated.

Then, as illustrated, the first electrode uncoated portion 21 is exposed at the one axial end of the electrode assembly 1 while the second electrode uncoated portion 41 is exposed at the other axial end of the electrode assembly 1.

Positive electrode active materials coated on a positive electrode plate (a sheet constituting the first electrode) and negative electrode active materials coated on a negative electrode plate (a sheet constituting the second electrode) that are publicly known in the art may be used in an unlimited manner.

The positive electrode active material may include a layered compound or compound substituted with one or more transition metals such as lithium cobalt oxide (LiCoO₂) and lithium nickel oxide (LiNiO₂); lithium manganese oxides (LiMnO₂) such as the chemical formula Li₁₊ₓMn₂ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃, or a compound whose main component is a lithium intercalation material such as a composite oxide formed by a combination thereof. Although the above types are used as the positive electrode active material, the present invention is not limited thereto.

For example, the positive electrode current collector has a thickness of 3 to 500 µm. The positive electrode current collector is not particularly limited as long as it has conductivity without causing chemical changes in a battery. Examples of the positive electrode current collector may include stainless steel, aluminum, nickel, titanium, calcined carbon, or aluminum or stainless steel whose surface has been treated with carbon, nickel, titanium, silver, or the like. The electrode current collector may have fine irregularities formed in a surface thereof to increase the adhesion between the electrode current collector and the positive electrode active material. The electrode current collector may be used in various forms such as a film, a sheet, a foil, a net, a porous body, a foamed body, a non-woven fabric body, and the like.

A conductive material may be additionally mixed with positive electrode active material particles. The conductive material is added in an amount of 1 to 50 wt% based on the total weight of the mixture including the positive electrode active material. The conductive material is not particularly limited as long as it has high conductivity without causing chemical changes in a battery. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as carbon fluoride, aluminum, and nickel powders; conductive whiskers such as zinc oxide and potassium titanate; conductive oxides such as titanium oxide; and conductive materials such as a polyphenylene derivative.

Further, the negative electrode sheet may be fabricated by applying and drying negative electrode active material particles on a negative electrode current collector, and may further include components such as the conductive material described above, a binder, a solvent, and the like as needed.

For example, the negative electrode current collector has a thickness of 3 to 500 µm. The negative electrode current collector is not particularly limited as long as it has conductivity without causing chemical changes in a battery. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the negative electrode active material, and may be used in various forms such as a film, a sheet, a foil, a net, a porous body, a foamed body, a nonwoven fabric body, and the like.

Examples of the negative electrode active material may include a carbon such as non-graphitized carbon or graphite-based carbon; a metal complex oxide such as LiₓFe₂O₃ (0<=x<=1), LiₓWO₂ (0<=x<=1), SnₓMe₁₋ₓMe'yO_{z} (Me: Mn, Fe, Pb, Ge; Me' : Al, B, P, Si, elements in Group I, II, and III on the periodic table, a halogen; 0 <x<=1); 1<=y<=3; 1 <= z <= 8); a lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, or the like.

A binder polymer capable of being used in the electrode sheets 11 and 12 is a component that assists in bonding the electrode active material particles and the conductive material and binding the electrode active material particles to the electrode current collector, and added in an amount of, for example, 1 to 50 wt% based on the total weight of the mixture including the electrode active material particles. Examples of the binder polymer may include at least one binder polymer selected from the group consisting of polyvinylidene fluoride-co-hexafluoropropylene (PVdF-HFP), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer can be formed at a desired level on a surface of the electrode current collector.

The negative electrode may include a current collector; and a negative electrode active material layer located on at least one surface of the current collector and including a negative electrode active material, a binder polymer, and a conductive material, wherein the negative active material layer includes a lower layer region in surface contact with the current collector and an upper layer region extending to the surface of the negative electrode active material layer while in surface contact with the lower layer region. The lower layer region and the upper layer region may each independently include at least one of graphite and a silicon-based compound as a positive electrode active material.

The lower layer region may include natural graphite as a positive electrode active material, and the upper layer region may include artificial graphite as a positive electrode active material.

Each of the lower layer region and the upper layer region may independently further include a silicon-based compound as a positive electrode active material.

The silicon-based compound may include at least one of SiOₓ (0≤x≤2) and SiC.

In one embodiment, the negative electrode may be manufactured in a way that a slurry for a lower layer comprising a negative electrode active material for a lower layer is coated and dried on a current collector and a lower layer area is formed, and then a slurry for an upper layer comprising a negative electrode active material for an upper layer is coated and dried on the lower layer area and an upper layer area is formed.

Additionally, in one embodiment, the negative electrode may be manufactured based on a method comprising: preparing a slurry for a lower layer comprising a negative electrode active material for a lower layer, and a slurry for an upper layer comprising a negative electrode active material for an upper layer;
coating the slurry for a lower layer on one surface of a negative electrode plate, and at the same time or after predetermined time, coating the slurry for an upper layer on the slurry for a lower layer; and
drying the coated slurry for a lower layer and the coated slurry for an upper layer at the same time and forming an active material layer.

In the latter manufacturing method, there may be an intermixing region where active materials of different sorts are mixed, in a portion of the negative electrode, wherein the lower layer region and the upper layer region contact each other. In the case where the slurry for a lower layer comprising a negative electrode active material for a lower layer and the slurry for an upper layer comprising a negative electrode active material for an upper layer are coated on a current collector, at the same time or one after another with very little time between them, and then dried at the same time to form an active material layer, a predetermined intermixing section is formed on the interface where the slurry for a lower layer and the sully for an upper layer contact each other before they are dried, and then the intermixing section is formed into a layer of the intermixing region while the slurry for a lower layer and the slurry for an upper layer are dried.

In the negative electrode active material layer of one embodiment of the present disclosure, a weight ratio (or a ratio of loaded amount per unit surface area) between the upper layer region and the lower layer region may be 20:80 to 50:50, specifically, 25:75 to 50:50.

In the present disclosure, the thickness of the lower layer region and the upper layer region of the negative electrode active material layer may not definitely match the thickness of the coated slurry for a lower layer and the coated slurry for an upper layer. However, a ratio of the thickness of the lower layer region to the thickness of the upper layer region of the negative electrode active material layer in the present disclosure, finally obtained after drying or selective rolling, may match a ratio of the thickness of the coated slurry for a lower layer to the thickness of the coated slurry for an upper layer.

The first slurry is coated, and the second slurry is coated on the first slurry, at the same time, or one after another with a predetermined time difference between them. In one embodiment, the predetermined time difference may be 0.6 or less second, or 0.02 to 0.6 second, or 0.02 to 0.06 second, or 0.02 to 0.03 second. The time difference at a time of coating the first slurry and the second slurry is caused by a coating apparatus. It is preferable to coat the first slurry and the second slurry at the same time. A device such as a double slot die and the like may be used to coat the second slurry on the first slurry.

In the step of forming an active material layer, rolling the active material layer may be further included after the drying step. At this time, rolling may be performed based on a method such as roll pressing commonly used in the art, and for example, performed at 1 to 20 MPa and 15 to 30 °C.

The step of forming an active material layer by drying the coated slurry for a lower layer and the coated slurry for an upper layer at the same time is performed with a device where a hot air drier and an infrared drier are combined, based on a method commonly used in the art.

The weight% of a first binder polymer in the solids of the slurry for a lower layer may be the same or greater than the weight% of a second binder polymer in the solids of the slurry for an upper layer. In one embodiment, the weight% of the first binder polymer in the solids of the slurry for a lower layer may be 1.0 to 4.2 times, or 1.5 to 3.6 times, or 1.5 to 3 times greater than the weight% of the second binder polymer in the solids of the slurry for an upper layer.

In the case where a ratio of the weight% of the first binder in the coated slurry for a lower layer to the weight% of the second binder in the coated slurry for an upper layer is within the above-mentioned range, the separation of an electrode layer does not occur since the binder in the lower layer area is not that little, and the resistance of the upper layer portion of an electrode decreases, and rapid charge performance may improve, since the binder of the upper layer area is not that great.

In the solids of the slurry for a lower layer, the weight% of the first binder polymer may be 2 to 30 wt% or 5 to 20 wt% or 5 to 20 wt%, and in the solids of the slurry for an upper layer, the rate (wt%) of the second binder polymer may be 0.5 to 20 wt%, or 1 to 15 wt%, or 1 to 10 wt%, or 2 to 5 w%.

A total rate (wt%) of the first binder polymer and the second binder polymer in the entire solids of the slurry for a lower layer and the slurry for an upper layer may be 2 to 20 wt% or 5 to 15 wt%.

The first electrode 2 and the second electrode 4 are stacked with the separator 3 therebetween. Additionally, an additional separator 3 may be stacked under the second electrode 4. As the first electrode 2 and the second electrode 4 are stacked, the first electrode coated portion 22 and the second coated portion 42 may overlap each other. The separator 3 may be disposed between the first electrode coated portion 22 and second electrode coated portion 42 areas, to prevent direct contact between the first electrode coated portion 22 and the second electrode coated portion 42.

A boundary between the first electrode uncoated portion 21 and the first electrode coated portion 22 may be disposed further inward than one width end of the separator 3 in the width direction, and the first electrode uncoated portion 21 may extend further outward than the one width end of the separator 3 in the width direction. A boundary between the second electrode uncoated portion 41 and the second electrode coated portion 42 is disposed further inward than the other width end of the separator 3 in the width direction, and the second electrode uncoated portion 41 is extended further outward than the other width end of the separator 3 in the width direction.

The separator includes a porous polymer substrate, and a porous coating layer located on both surfaces of the porous polymer substrate and including inorganic particles and a binder polymer.

The porous polymer substrate may be a polyolefin-based porous substrate.

The polyolefin porous substrate may be in the form of a film or a non-woven web. By having the porous structure as described above, the electrolyte may be smoothly moved between the positive electrode and the negative electrode. The porous structure may increase an electrolyte impregnation property of the substrate itself so that excellent ion conductivity may be secured, and may prevent an increase in resistance inside an electrochemical device so that performance degradation of the electrochemical device may be prevented.

The polyolefin porous substrate used in the present invention may be any planar porous substrate that is generally used in electrochemical devices, and the material or shape thereof may be variously selected as desired.

The polyolefin porous substrate may include, but is not limited to, high density polyethylene, low density polyethylene, linear low density polyethylene, ultrahigh molecular weight polyethylene, or polypropylene, or may be a film or non-woven web formed of a mixture of two or more thereof.

The polyolefin porous substrate may have a thickness of 8 to 30 µm, but this is only an example, and the polyolefin porous substrate may also have a thickness that is out of the above range in consideration of mechanical properties or high-efficiency charge/discharge characteristics of a battery.

A woven fabric sheet in the present disclosure may be made of polyethylene (PE), polypropylene (PP), or a mixture of two or more thereof. For example, the woven fabric sheet may be manufactured based on fiber spinning. For example, the woven fabric sheet may be manufactured in a way that fibers of the above materials are fabric-spinned and mixing-spinned at a melting point or greater, based on melt blowing.

The woven fabric sheet may have an elongation rate of 200 to 400 %, preferably, 300 to 400 %. In the case of an elongation rate of less than 200 %, contact between an electrode and an electrode is highly likely to occur at a time when a nail penetrates, and in the case of an elongation rate of greater than 400 %, a surrounding portion where a nail penetrates is also elongated, and the separator becomes thin, resulting in a reduction in the barrier properties (blockability).

The woven fabric sheet has a plurality of pores having an average diameter of 0.1 to 10 µm. In the case of a pore having a size of less than 0.1 µm, a smooth flow of lithium ions and/or an electrolyte solution is not ensured, and in the case of a pore having a size of greater than 0.1 µm, contact between a positive electrode and a negative electrode may not be prevented, since the woven fabric sheet is elongated at a time when a nail penetrates.

Additionally, the woven fabric sheet may have porosity of 40 to 70 %. In the case of porosity of less than 40 %, a smooth flow of lithium ions and/or an electrolyte solution may not be ensured, and in the case of porosity of greater than 70 %, contact between a positive electrode and a negative electrode may not be prevented, since the woven fabric sheet is elongated at a time when a nail penetrates. The woven fabric sheet manufactured as described above may have permeability of 1 to 20 seconds/100 mL.

Further, the woven fabric sheet may have a thickness of 10 to 20 µm, and the numerical values are provided as an example. The woven fabric sheet may have a thickness outside the above-mentioned range of thicknesses, depending on the permeability of the woven fabric sheet.

The woven fabric sheet may be coupled to the components of the separator that is disposed under the woven fabric sheet, based on lamination. The lamination process may be performed at a temperature range of 100 to 150 °C. In the case where the lamination process is performed at less than 100 °C, the lamination effect is not produced, and in the case where the lamination process is performed at greater than 150 °C, a portion of the woven fabric melts.

Under the above-mentioned conditions, the lamination-coupled separator in one aspect ensures improvement in resistance against nail penetration, unlike a separator which is comprised of a conventional woven fabric sheet, or a separator in which a layer comprising inorganic particles is formed on at least one surface of a film or a woven fabric sheet.

In the porous coating layer, the inorganic particles bind one another in the state of being charged and contacting each other, with the help of the binder polymer. Accordingly, interstitial volume is formed among the inorganic particles, and the interstitial volume among the inorganic particles may be a vacant space and form a pore.

As an inorganic particle used to form the porous coating layer, inorganic particles, i.e., inorganic particles that cause no oxidation and/or reduction reaction within an operation voltage range (e.g., 0 to 5V with respect to Li/Li⁺) of an electrochemical element, may be further added. In the case where inorganic particles capable of delivering ions are used as the inorganic particle, an increase in the ion conductance in the electrochemical element may lead to improvement in performance. Additionally, in the case where inorganic particles having high permittivity are used as the inorganic particle, the inorganic particles having high permittivity may contributes to an increase in the dissociation of electrolyte salt, e.g., lithium salt, in liquid electrolytes, and improve ion conductance in an electrolyte solution.

For the above-mentioned reasons, the inorganic particle comprises a high-permittivity inorganic particle of a permittivity constant of 5 or greater, preferably, 10 or greater, an inorganic particle having the ability of deliver lithium ions, and a mixture thereof, preferably.

Unlimited examples of inorganic particles having a permittivity constant of 5 or greater comprise BaTiO₃, Pb(Zr,Ti)O₃(PZT), Pb₁₋ₓLaₓZr_{1-y}Ti_{y}O₃(PLZT), PB(Mg_{1/3}Nb_{2/3})O₃-PbTiO₃(PMN-PT), hafnia (HfO₂), SrTiO₃, SnO₂, CeO₂, MgO, NiO, CaO, ZnO, ZrO₂, Y₂O₃, Al₂O₃, TiO₂, SiC or a mixture thereof and the like.

In particular, inorganic particles such as BaTiO₃, Pb(Zr,Ti)O₃(PZT), Pb₁₋ₓLaₓZr_{1-y}Ti_{y}O₃(PLZT), PB(Mg_{1/3}Nb_{2/3})O₃-PbTiO₃(PMN-PT) and hafnia (HfO₂), described above, exhibit piezoelectricity indicating a potential difference between both surfaces, caused by the generation of charges in the case of elongation or compression based on the application of certain pressure, as well as permittivity indicating a permittivity constant of 100 or greater, thereby preventing an external impact-induced short circuit in two electrodes and ensuring improvement in the reliability of an electrochemical element. Additionally, in the case where the high permittivity inorganic particles and the inorganic particles having the ability to deliver lithium ions, described above, are mixedly used, the effect of preventing an external impact-induced short circuit and improving the reliability of an electrochemical element may be produced further.

The inorganic particles having the ability to deliver lithium ions do not store lithium, while containing lithium, and indicate inorganic particles moving lithium ions. The inorganic particles having the ability to deliver lithium ions can deliver and move lithium ions because of a sort of defect in their particle structures, resulting in improvement in the conductivity of lithium ions in a cell and enhancement in the performance of a cell. Un limited examples of the inorganic particles having the ability to deliver lithium ions comprise lithium phosphate (Li₃PO₄), lithium titanium phosphate (LiₓTi_{y}(PO₄)₃, 0<x<2, 0<y<3) lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13) such as 14Li₂O-9Al₂O₃-38TiO₂-39P₂O₅ and the like, lithium lanthanum titanate (LiₓLa_{y}TiO₃, 0< x < 2, 0 < y < 3), lithium germanium thiophosphate (LiₓGe_{y}P_{z}S_{w}, 0 < x < 4, 0 < y <1, 0 < z < 1, 0 < w < 5) such as Li_{3.25}Ge_{0.25}P_{0.75}S₄ and the like, lithium nitride (LiₓN_{y}, 0 < x < 4, 0 < y < 2) such as Li₃N and the like, SiS₂-based glass (LiₓSi_{y}S_{z}, 0 < x < 3, 0 < y < 2, 0 < z < 4) such as Li₃PO₄-Li₂S-SiS₂ and the like, P₂S₅-based glass (LiₓP_{y}S_{z},0< x<3, 0<y<3, 0< z<7) such as LiI-Li₂S-P₂S₅ and the like, or a mixture thereof and the like.

The size of the inorganic particles of the porous coating layer is not limited, but preferably 0.001 to 10 µm, to form a coating layer of uniform thickness and ensure proper porosity. In the case of an inorganic particle having a size of less than 0.001 µm, the dispersibility of the inorganic particle may deteriorate, and in the case of an inorganic particle having a size of greater than 10 µm, the thickness of the porous coating layer increases, mechanical properties deteriorate. Additionally, an excessively large pore is highly likely to cause an internal short circuit at a time of charge and discharge of a cell.

The binder polymer forming the porous coating layer may comprise any one binder polymer selected from a group comprised of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose or a mixture of two or more thereof, but not be limited.

A composition ratio of an inorganic particle to a binder polymer, used for a porous coating layer, is within a range of 50:50 to 99:1, for example, and 70:30 to 95:5, preferably. In the case where the composition ratio of an inorganic particle to a binder polymer is less than 50:50, the polymer is included in large amounts, and the thermal reliability of a separator may fail to improve, and may cause a reduction in the vacant space formed among the inorganic particles, resulting in a decrease in the size of a pore and the porosity and deterioration in the performance of a final cell. In the case where the content of the inorganic particle is greater than 99 wt%, the binder polymer is included in very small amounts, and the peel resistance of a porous coating layer may deteriorate. The thickness of the porous coating layer is not limited but is preferably in a range of 0.01 to 20 µm. The pore size and porosity are not limited, but the pore size is preferably in a range of 0.001 to 10 µm, and the porosity is preferably in a range of 10 to 90 %. The pore size and porosity mainly depend on the size of an inorganic particle, and for example, in the case where an inorganic particle having a particle size of 1 µm or less is used, the size of a pore formed is also about 1 µm or less. The above-mentioned pore structure is filled with an electrolyte solution that is injected later, and the electrolyte solution delivers ions. In the case where the pore size and porosity is respectively less than 0.001 µm and 10 %, the layer acts as a resistance layer, and in the case where the pore size and porosity is respectively greater than 10 µm and 90 %, the mechanical properties of the layer may deteriorate.

The porous coating layer may be formed in a way that a binder polymer is dissolved or dispersed in a dispersion medium, inorganic particles are added to the dispersion medium, a slurry for forming a porous coating layer is obtained, and the slurry is coated and dried on at least one surface of a base material. Preferably, the dispersion medium has a solubility index similar to that of a binder polymer to be used, and has a low boiling point, to be readily removed after an even mixture. Unlimited examples of available dispersion media comprise acetone, tetrahydrofuran, methylene chloride, chloroform, dimethylformamide, N-methyl-2-pyrrolidone (NMP), cyclohexane, water or a mixture thereof and the like.

After inorganic particles are added to the dispersion solution where the binder polymer is dispersed in the dispersion medium, the inorganic particles are crushed, preferably. At this time, the inorganic particles are crushed for 1 to 20 hours, preferably, and the particle size of the crushed inorganic particles is preferably 0.001 to 10 µm, as described above. An ordinary method may be used to crush the inorganic particles, and in particular, ball milling is preferred.

Then the binder polymer dispersion solution in which the inorganic particles are dispersed is coated and dried on at least one surface of a porous polymer base material, at humidity of 10 to 80 %. The dispersion solution may be coated on the porous polymer base material, based on an ordinary coating method that is known in the art. For example, the ordinary coating method may comprise dip coating, die coating, roll coating, comma coating or a combination thereof.

Additives such as a conductive material and the like may be further added as a component of a porous coating layer, in addition to the above-described inorganic particle and binder polymer.

The separator according to the present invention may have a thickness of 1 to 100 µm or 5 to 50 µm. When the thickness of the separator is less than 1 µm, the function of the separator may not be sufficiently exhibited, and the deterioration of mechanical properties may occur. When the thickness of the separator is greater than 100 µm, battery characteristics may be deteriorated during high-rate charging/discharging. In addition, the separator may have a porosity of 40 to 60%, and may have an air permeability of 150 to 300 sec/100 ml.

In one embodiment of the present invention, the porous polymer substrate may use a polyethylene or polypropylene series. In addition, Al oxide and Si oxide-based coating materials may be used as inorganic particles in the porous coating layer.

When the separator in one embodiment of the present invention is used, since the porous coating layer is provided on both sides of the porous polymer substrate, a solid electrolyte interface layer may be uniformly formed due to the improvement of impregnation performance with respect to the electrolyte, and superior air permeability may be secured as compared to a conventional single-sided inorganic-coated separator. For example, the air permeability may be within 120 sec/100 cc. In addition, even when the inorganic porous coating layer is provided on both sides of the porous polymer substrate, a thickness comparable to that of the conventional single-sided inorganic-coated separator may be realized. For example, the thickness may be within 15.0 µm.

Further, when the separator in one embodiment of the present invention is used, the stability of the separator may be improved so that heat- and pressure-resistant properties may be secured. Specifically, it is possible to secure a heat-resistant property having a heat-shrinkage property of 5% or less at 180 °C and secure a puncture strength of 550 gf or more, and damage or penetration of the separator in a step portion may be prevented when core deformation occurs during a cycle of the battery in which the separator is employed.

The thickness of the first electrode 2 may be greater than the thickness of the second electrode 4. The rigidity of a material for the first electrode 2 may be greater than the rigidity of a material for the second electrode 4. The length at which the second electrode uncoated portion 41 is extended in the width direction may be greater than the length at which the first electrode uncoated portion 21 is extended in the width direction. The second electrode uncoated portion 41, as described above, may be made of a material having less rigidity than that of the first electrode uncoated portion 21, be extended further than the first electrode uncoated portion 21 and have a thickness less than that of the first electrode uncoated portion 21. Accordingly, in the case where the uncoated portions are pressed in the axial direction, buckling is highly likely to occur to the second electrode uncoated portion 41 rather than the first electrode uncoated portion 21.

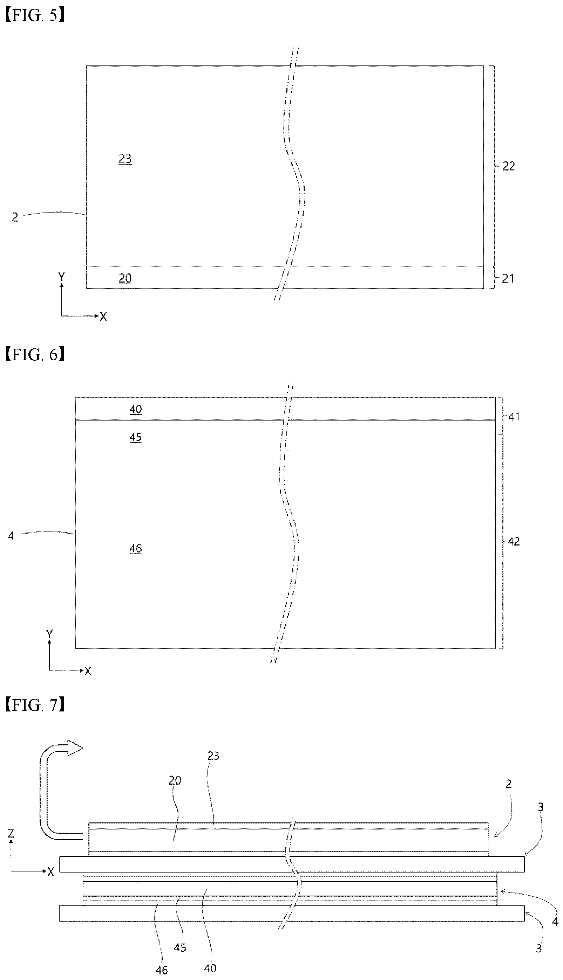

The surface area of the first electrode 2 is less than the surface area of the second electrode 4. That is, the width and length of the first electrode 2 are slightly less than those of the second electrode 4. Accordingly, the second electrode 4, as illustrated in FIG. 7, is extended further outward than the first electrode 2 in the lengthwise direction, in the state where the first electrode 2, the first separator 3, the second electrode 4 and the second separator 3 are stacked.

The width of the first electrode coated portion 22 is also shorter than the width of the second electrode coated portion 42. Accordingly, the second electrode coated portion 42 is extended further outward than the first electrode coated portion 22, in both the width direction and axial direction. This means that a distance by which the other axial end of the first electrode 2 is disposed axially further inward than the other axial end of the separator 3, is greater than a distance by which one axial end of the second electrode 4 is disposed axially further inward than one axial end of the separator 3. That is, since the other axial end of the first electrode 2 is hidden further inside the separator 3 than one axial end of the second electrode 4 is hidden inside the separator 3, it may be thought that a short circuit between the first electrode 2 and the second electrode 4 is highly likely to occur at the one axial end of the electrode assembly 1, at which the first electrode uncoated portion 21 extends axially.

However, notably, a short circuit is highly likely to occur as the second electrode uncoated portion 41 contacts the other axial end of the first electrode 2, while the second electrode uncoated portion 41 invades the separator 3 due to the buckling of the second electrode uncoated portion 41, since the second electrode uncoated portion 41 is more vulnerable to buckling than the first electrode uncoated portion 21, as described above.

The first electrode uncoated portion 21 and the second electrode uncoated portion 41, exposed respectively to both axial sides of the electrode assembly 1, may radially bend inward, i.e., in the centripetal direction, as illustrated. The bent uncoated portions may provide a substantially planar surface facing the axial direction. A first electrode current collecting plate 5 and a second electrode current collecting plate 6 may respectively weld to and electrically connect to the uncoated portions that are bent and planarized at both axial sides of the electrode assembly.

In the embodiment, the second electrode current collecting plate 6 welds to the bent surface of the second electrode uncoated portion 41. While the second electrode current collecting plate 6 welds to the welding portion of the second electrode uncoated portion 41, the second electrode current collecting plate 6 keeps contacting the second electrode uncoated portion 41. In this process, the second electrode current collecting plate 6 axailly presses the second electrode uncoated portion 41.

At this time, significant pressing force is applied to maintain the contact state, and the base end of the second electrode uncoated portion 41 is likely to experience buckling, as illustrated in FIG. 4. To prevent this from happening, an insulating coating layer 45 is formed near the base end of the second electrode uncoated portion 41 that is highly likely to experience buckling, in the present disclosure.

The insulating coating layer 45 may comprise a polymer resin, and a filter of an inorganic material such as Al₂O₃.

The insulating coating layer 45 improves rigidity near the base end of the second electrode uncoated portion 41. Accordingly, to weld the second electrode uncoated portion 41, as the second electrode uncoated portion 41 receives axial force by a second electrode current collecting plate 6, a bottom surface 301F of a battery can 301C or a cap 307, the base end of the second electrode uncoated portion 41 may not be buckled.

As the insulating coating layer 45 improves the rigidity of the base end of the second electrode uncoated portion 41, the second electrode uncoated portion 41 and the first electrode 2 contact each other with the insulating coating layer 45 therebetween, without directly contacting each other, and the occurrence of a short circuit between the first electrode 2 and the second electrode 4 may be prevented, even if the base end of the second electrode uncoated portion 41 buckles.

The insulating coating layer 45 provides bending resistance during the radial bending process of the second electrode uncoated portion 41. Accordingly, when the second electrode uncoated portion 41 bends radially, a section of the second electrode uncoated portion 41, on which the insulating coating layer 45 is coated, is not almost deformed, and the section of the second electrode uncoated portion 41, on which the insulating coating layer 45 is not coated, is mainly deformed.

The insulating coating layer 45 covers a predetermined section from a boundary between the second electrode coated portion 42 and the second electrode uncoated portion 41 toward the end of the second electrode uncoated portion 41. The insulating coating layer 45 is extended from a position further inward than the axial end of the separator 3 to a position axially further outward than the separator 3.

The insulating coating layer 45 also covers a micro section of the end of the second electrode coated portion 42 when covering the boundary between the second electrode coated portion 42 and the second electrode uncoated portion 41. The portion that is significantly deformed due to buckling may be the boundary between the second electrode coated portion 42 and the second electrode uncoated portion 41. Since the insulating coating layer 45 also covers the micro section 43 of the end of the second electrode coated portion 42 at the boundary, the insulating coating layer 45 significantly increases the buckling resistance of the boundary between the second electrode coated portion 42 and the second electrode uncoated portion 41.

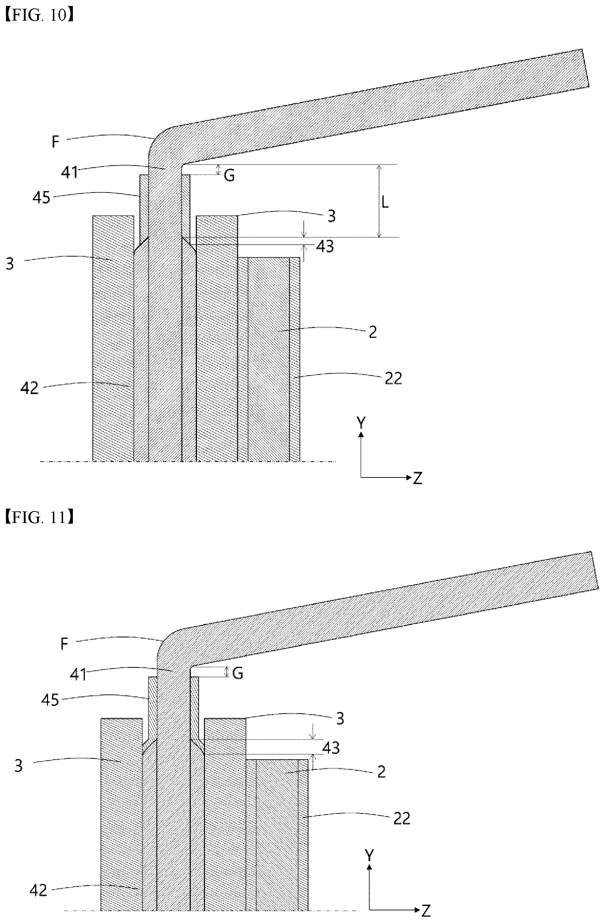

The insulating coating layer 45 is coated to have a constant thickness or to have a thickness that changes along the axial direction. FIG. 10 shows a structure in which the thickness of the insulating coating layer 45 increases gradually in a glide section (a section in which the thickness decreases) that is formed in the end of a negative electrode active material. The insulating coating layer 45 has a constant thickness in the section that covers the second electrode uncoated portion 41.

FIG. 11 shows a structure in which the insulating coating layer 45 has a constant thickness in the glide section as well as the section that covers the second electrode uncoated portion 41.

The thickness of the insulating coating layer 45 is thinner than the thickness of the negative electrode active material layer. Accordingly, the second electrode coated portion 42 closely contacts the separator 3 in the radial direction, but the insulating coating layer 45 may be spaced from the separator 3 to some degree, or may contact the separator 3 but not closely contact the separator 3, as illustrated.

Then during the processes of bending the second electrode uncoated portion 41 and welding the second electrode current collecting plate 6 to the second electrode uncoated portion 41, even if external force is applied to the second electrode uncoated portion 41 so that the base end of the second electrode uncoated portion 41 is deformed, the deformation amount may be suppressed, and the deformation of the base end of the second electrode uncoated portion 41 does not affect the separator 3 immediately. That is, the second electrode uncoated portion 41 has a section by a gap between the insulating coating layer 45 and the separator 3 and in which deformation is allowable without affecting the separator 3.

Further, when the insulating coating layer 45 is spaced from the separator 3, heat, which is generated during the welding process of the second electrode uncoated portion 41 to the second electrode current collecting plate 6, the bottom surface 301F of the battery can 301C or the cap 307, is prevented from being conducted directly to the separator 3 through the insulating coating layer 45, and then the separator 3 is protected from the welding heat. Further, since the height at which the separator 3 protrudes in the axial direction can be shortened by the insulating coating layer 45, a distance from the position where the welding heat is generated to the axial end of the separator 3 can be enlarged, enhancing protection of the separator 3 from the welding heat.

Since the electrode assembly 1 is wound in a cylindrical shape, the insulation coating area of the second electrode uncoated portion 41 on which the insulating coating layer 45 is coated also has a cylindrical curved surface. The cylindrical curved surface itself has bending resistance. In the embodiments, since the insulation coating area has a cylindrical curved surface that is thicker than the second electrode uncoated portion 41, the insulation coating area provides higher bending resistance at a time when an upper area of the cylindrical curved surface bends radially. Thus, a portion of the second electrode uncoated portion 41, on which insulation coating is not applied, is induced bending.

At this time, since the insulation coating area provides higher bending resistance, the insulating coating layer can exert bending resistance sufficiently, even if the thickness of the insulating coating layer 45 is less than the thickness of the negative electrode active material layer such that the surface of the insulating coating layer 45 is spaced from and not supported by the separator 3 in the radial direction.

The front end of the insulating coating layer 45 is coated in a way that the front end of the insulating coating layer 45 is spaced from the bent portion F of the second electrode uncoated portion 41 by a slight gap G. This leads the second electrode uncoated portion 41 to bend at the bent portion F. Further, since the second electrode uncoated portion 41 is deformed with a slight gap G from the insulating coating layer 45, damage to the insulating coating layer 45, caused by the bending process of the uncoated portion can be prevented.

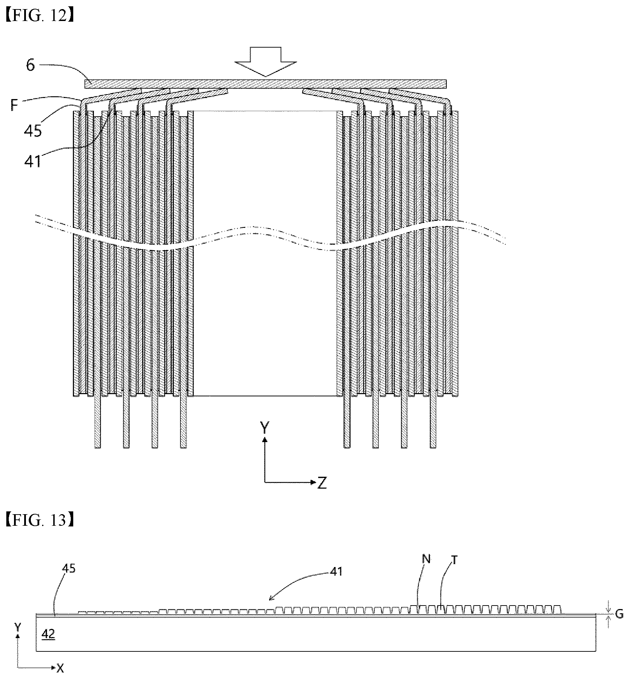

The bucking of the second electrode uncoated portion 41 provided with the insulating coating layer 45 can be prevented even if the second electrode uncoated portion is axially pressed by the second electrode current collecting plate 6 as illustrated in FIG. 12.

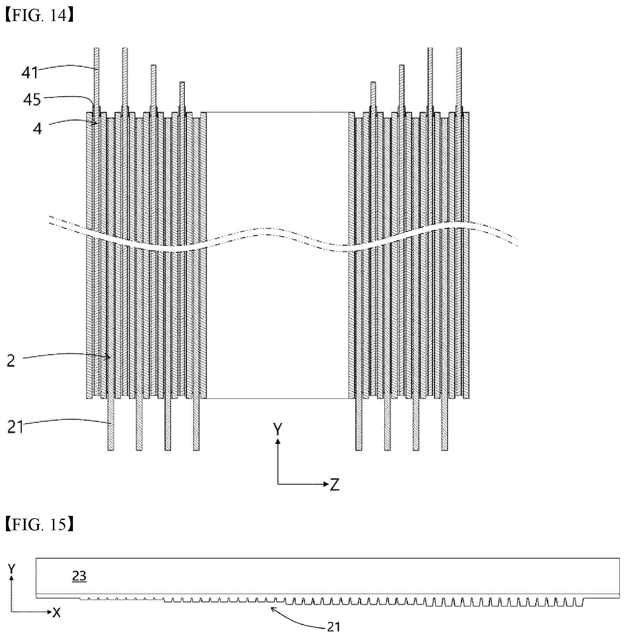

Further, the second electrode uncoated portion 41 may be provided with a bend-inducing structure N, T that induces the second electrode uncoated portion 41 to bend at a predetermined axial position. The bend-inducing structure N, T may, for example, be formed by cutting the second electrode uncoated portion 41 axially from the front end of the second electrode uncoated portion 41 over the axial section where bending of the second electrode uncoated portion 41 is required to form a notch part N and subdividing the second electrode uncoated portion 41 into notch tabs T accordingly. Due to the bend-inducing structure N, T, the bent position F of the second electrode uncoated portion 41 may be accurately induced to the lower end of the notch tab T. Certainly, a bend-inducing structure may be applied to the first electrode uncoated portion 21 in the same way (see FIG. 15).

Referring to FIG. 13, the height of the notch tabs T of the uncoated portions increases gradually toward the outer circumference side (the right side in the drawing) of the electrode assembly from the core side (the left side in the drawing) of the electrode assembly. Then the flatness of the notch tab T may increase in the state where the notch tab T lies radially inward by the bending process of the second electrode uncoated portion 41. Additionally, the notch tab is completely removed at the core side of the electrode assembly, such that the bend notch tab T is prevented from covering the hollow hole portion of the electrode assembly 1, even if the notch tab T bends radially inward. Further, in the case where the notch tab T corresponding to the one last winding turn at the outer circumference side of the electrode assembly is removed, an unexpected deformation of the notch tab T of an outermost turn may be prevented while the electrode assembly 1 is dealt with.

The insulating coating layer 45 may be provided in a section from the boundary between the second electrode coated portion 42 and the second electrode uncoated portion 41 to the bend-inducing structure N, T.

The insulating coating layer 45 may cover at least a partial area of the section in the axial direction.

In the embodiment, the insulating coating layer 45 is applied to the base end potion of the second electrode uncoated portion 41, for example. However, the insulating coating layer 45 can also be applied to the first electrode uncoated portion 21, certainly.

FIG. 14 shows an electrode assembly 1 formed in a way that the second electrode 4 having a notch tab T the height of which increases toward the outer circumference side of the electrode assembly as illustrated in FIG. 13, and the first electrode 2 having a first electrode uncoated portion 21 the height of which is constant are wound.

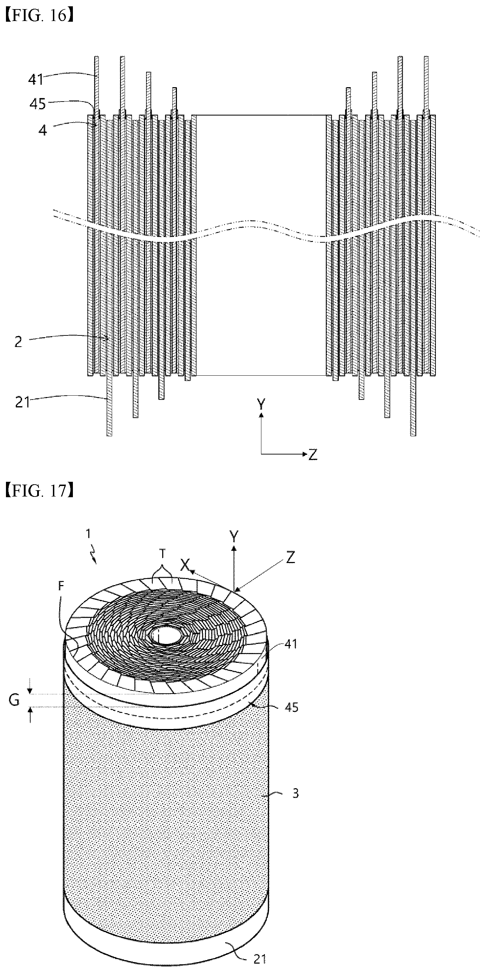

FIG. 16 shows an electrode assembly formed in a way that the second electrode 4 having a notch tab T the height of which increases toward the outer circumference side of the electrode assembly, as illustrated in FIG. 13, and the first electrode 2 having a notch tab T the height of which increases toward the outer circumference side of the electrode assembly, as illustrated in FIG. 15, are wound.

In the case where the height of the first electrode uncoated portion 21 and/or the second electrode uncoated portion 41 decreases toward the center of the electrode assembly, the hollow hole portion of the winding center of the electrode assembly 1 may remain open axially as illustrated in FIG. 17, even if the first electrode uncoated portion 21 and/or the second electrode uncoated portion 41 bends in the centripetal direction, and serve as a passage through which a welding jig passes or a passage in which an electrolyte solution is injected and wet.

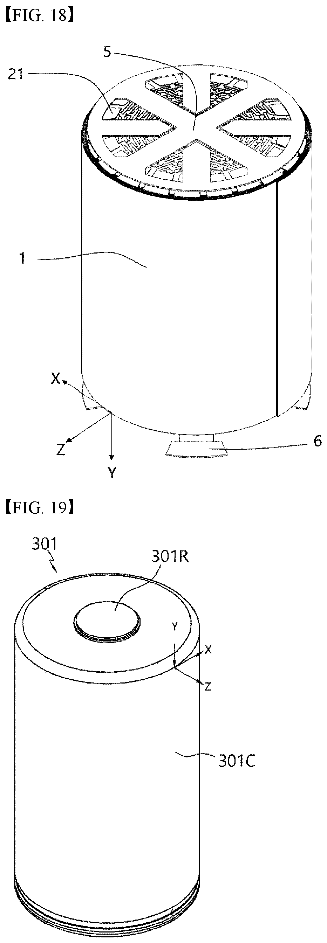

On the respective surfaces of overlapping first electrode uncoated portion 21 and second electrode uncoated portion 41, the first electrode current collecting plate 5 and the second electrode current collecting plate 6 are respectively attached and secured by welding or similar methods, as shown in FIG. 18.

The insulating coating layer 45 is extended axially further outward than the separator 3. Accordingly, even if the base end of the second electrode uncoated portion 41 buckles, the possibility of electrically shorting of the second electrode uncoated portion 41 to the adjacent first electrode 2 interposed the separator 3 therebetween can be eliminated.

The insulating coating layer 45 may not cover it completely to the bend-inducing structure N, T or the bent position, and by a predetermined gap G. Accordingly, stress may not be delivered to the insulating coating layer 45 when a bend occurs at the bent position, such that the stress does not affect the buckling resistance of the insulating coating layer 45.

The buckling resistance of the second electrode uncoated portion in the gap G section where the insulating coating layer 45 is not formed is weaker than in the section where the insulating coating layer 45 is formed. Accordingly, even if the second electrode uncoated portion 41 experiences buckling due to the pressure applied by the second electrode current collecting plate 6, buckling may be induced to the gap G section. Since the bent position is significantly far from the first electrode 2 in the axial direction, the portion where buckling is occurred is less likely to contact the first electrode 2 even if buckling occurs in the gap G section. That is, the gap G section may be spaced from the other axial end of the first electrode 2 by a distance long enough for the portion not to contact the first electrode 2.

The insulating coating layer 45 helps to increase the thickness of the second electrode uncoated portion 41. Accordingly, at the area covered by the insulating coating layer 45, the buckling resistance of the second electrode uncoated portion 41 increases.

Further, even if the second electrode uncoated portion 41 experiences buckling in the most unexpected insulating coating layer 45 section, it is unlikely that the portion contacts the first electrode 2, since the portion is covered with the insulating coating layer 45.

The insulating coating layer 45 may be applied on the uncoated portion of whichever electrode is more susceptible to buckling in the uncoated portion where buckling may occur. If the uncoated portion comprising the first electrode uncoated portion 21 and the second electrode uncoated portion 41 bends at the respective bent position F, buckling occurs in a section from the bent position F to the boundary between the uncoated portion and the active material coated portion. The section may denote a section from the upper portion of the gap G section to the upper portion of the micro section 43 in FIG. 10. In relation to the length L of the section, the thickness t of the electrode foil, and the elastic modulus E of metal, a buckling load per unit length of the uncoated portion in the circumferential direction is inversely proportional to L², and is proportional to the elastic modulus E and a cross section secondary moment I. The cross section secondary moment I per unit length is proportional to t³. Accordingly, the magnitude of buckling resistance of the first electrode uncoated portion 21 and the second electrode uncoated portion 41 may be determined based on Et³/ L².

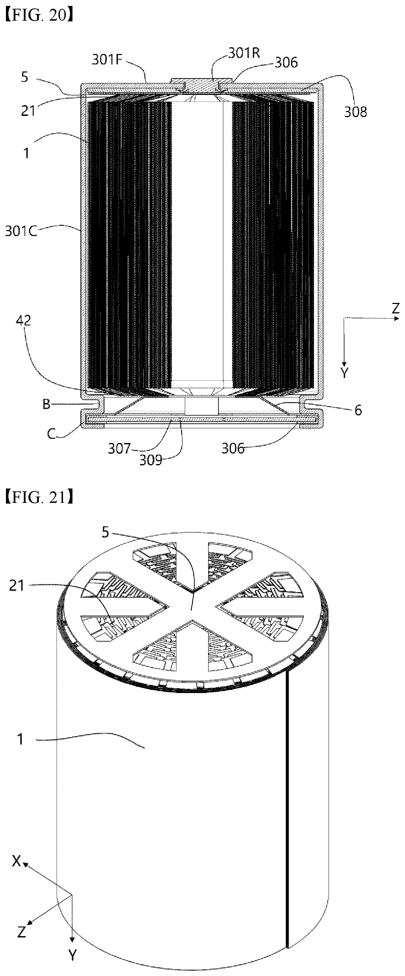

The electrode assembly 1 in FIG. 18 may be accommodated in the battery can 301C, as illustrated in FIGS. 19 and 20. The battery can 301C may connect to the second electrode current collecting plate 6 of the electrode assembly 1 and constitutes a negative electrode terminal, and a rivet terminal 301R provided at the center of one axial end of the battery can 301c may connect to the first electrode current collecting plate 5 of the electrode assembly 1 and constitute a positive electrode terminal. That is, the electrode assembly 1 may be accommodated in the battery can 301C and constitute a cylindrical battery cell 301.

Referring to FIG. 20, the peripheral portion of the first electrode current collecting plate 5 welds to the first electrode uncoated portion 21, and the central portion of the first electrode current collecting plate 5 welds to the electrode terminal 301R, such that the electrode terminal 301R may have the polarity of the first electrode. An insulator 308 is interposed between the first electrode current collecting plate 5 and the bottom 301F of the battery can 301C, and insulates the battery can 301C from the first electrode.

Since the central portion of the second electrode current collecting plate 6 is open, the hollow hole portion of the winding center of the electrode assembly 1 may be exposed in the axial direction. As illustrated, a partial area of the second electrode current collecting plate 6 welds to the second electrode uncoated portion 41 on which the insulating coating layer 45 is coated, and a partial area thereof is pressed against the battery can 301c or welds to the battery can 301c.

A gasket 307 is interposed between the open end of the battery can 301C and a cap 307, and the open end portions are finished with the cap 307. In FIG. 20, a gasket 307 is interposed between the cap 307 having a vulnerable part 309 for a venting function and a crimping part C of the battery can 301C, and is pressed fixed to the crimping part. A partial area of the second electrode current collecting plate 6 engages with the crimping part C to allow the second electrode and the battery can 301c to electrically connect.

In the embodiments, the second electrode current collecting plate 6 engages with the crimping part C, as illustrated in FIG. 20, for example. However, if the second electrode can electrically connect to the battery can 301c, the second electrode current collecting plate 6 may be interposed between a beading part B and the electrode assembly 1, for example. Further, the second electrode current collecting plate 6 and the beading part B may be compressed and/or weld to electrically connect each other.

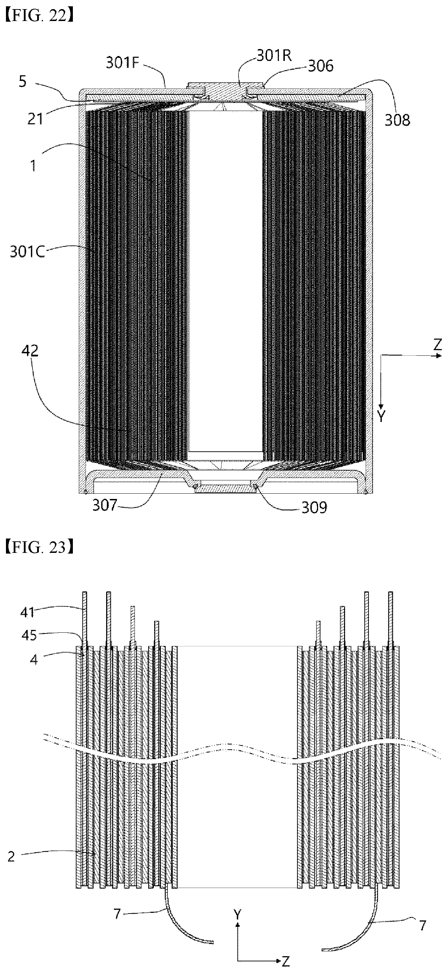

FIG. 21 shows an electrode assembly 1 in which the second electrode current collecting plate 6 does not connect to the second electrode uncoated portion 41, and the first electrode current collecting plate 5 only connects to the first electrode uncoated portion 21. In the structure, for example, the bent portion of the second electrode uncoated portion 41 on which the insulating coating layer 45 is coated may directly weld to the cap 307 of the battery can 301C, as illustrated in FIG. 22.

Referring to FIG. 22, the second electrode uncoated portion 41 directly welds to the cap 307. The cap 307 has the polarity of the second electrode, and the battery can 301C may also have the polarity of the second electrode. Accordingly, the cap 307 and the battery can 301C may be fixed by a method such as welding, soldering or the like. The cap 307 has a vulnerable part 309 in the central portion thereof, and the vulnerable part 309 performs a venting function and serves as a solution injection opening.

In the embodiments, the cap 307 presses the second electrode uncoated portion 41 in the axial direction to weld the cap 307 to the second electrode uncoated portion 41. At this time, the insulating coating layer 45 is resistant against the compression with sufficient rigidity, causing no buckling. Additionally, since the axial protruding length of the separator 3 can be shortened by the rigidity of the insulating coating layer 45, it is possible for heat that is generated as the cap 307 welds to the second electrode uncoated portion 41 not to affect the separator 3.

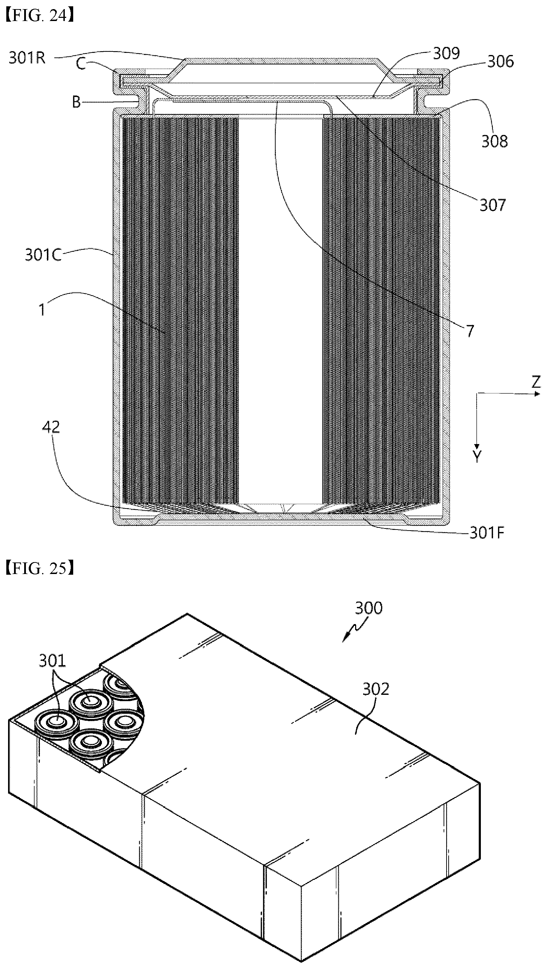

In FIGS. 23 and 24, the second electrode uncoated portion 41 directly connects to the bottom of the battery can 301C, without the second electrode current collecting plate 6, after the second electrode uncoated portion 41 bends, and the first electrode 2 electrically connects to the electrode terminal 301R of the cap 307 through an electrode tab 7. In the structure, the bent portion of the second electrode uncoated portion 41 on which an insulating coating layer 45 is coated as illustrated may directly weld to the bottom surface 301F of the battery can 301C.

In the embodiments, relatively high inner resistance of the second electrode 4 may be reduced significantly by using the second electrode uncoated portion 41 with a large number of current paths, and inner resistance of the first electrode 2 may be reduced by using two or more electrode tabs 7, while a vent structure 309 may be applied to cap 307. Though not illustrated, a thermal runaway prevention structure (a current interrupt device (CID)) may be applied to the cap 307, certainly.

When such a vent structure or CID structure is applied to the cap 307, a structure such as an electrode tab is required for easy assembling due to assembling method. In such a configuration, employing the first electrode 2 with the first electrode uncoated portion 21 and first electrode current collecting plate 5 as shown in the above-described embodiments would occupy substantial volume in the axial direction, which can be detrimental to securing electrical capacity. Accordingly, in this embodiment, an electrode tab 7 is used to connect the first electrode 2 to the electrode terminal 301R, thereby further enhancing the electrical capacity.

Further, the bent first electrode uncoated portion 21 and the first electrode current collecting plate 5 may impede or obstruct the internal pressure in the battery can 301C from acting on the vent structure or the CID structure, which may be detrimental to their functionality. In contrast, by using two or more electrode tabs 7 as in this embodiment, the internal resistance can be reduced as required without affecting the vent function or CID function.

FIG. 25 shows a battery pack 300 in which a battery cell 301 is accommodated in a housing 301, and battery cells connect each other in series and/or in parallel with a busbar and the like, to supply proper voltage and current.

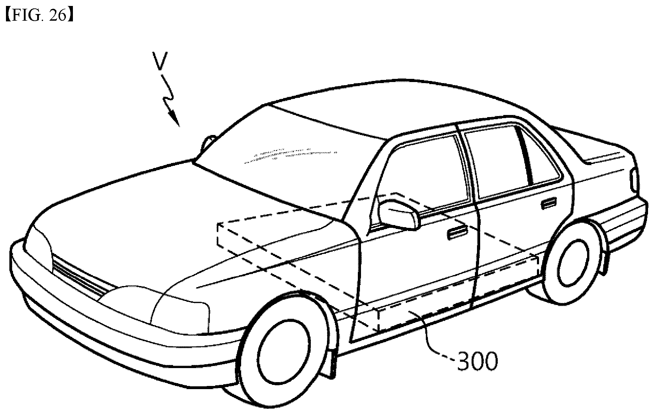

FIG. 26 shows a vehicle V equipped with the battery pack 300. The battery cell 301 to which the insulating coating layer 45 in the present disclosure is applied can be used for vehicles. Further, the battery cell 301 can be used for products in various areas.

The embodiments described above are provided as examples and are not limited, in all aspects.

The embodiments are described above with reference to a number of illustrative embodiments thereof.

## Claims

1. A cylindrical electrode assembly (1) in which a first electrode (2) and a second electrode (4) are wound in a state where the first electrode (2) and the second electrode (4) are stacked with a separator (3) therebetween,
wherein the first electrode (2) includes a first electrode coated portion (22), the first electrode coated portion (22) having a first active material coated on a surface of the first electrode (2),
wherein the second electrode (4) includes:
a second electrode coated portion (42) having a second active material (46) coated on a surface of the second electrode (4);
a second electrode uncoated portion (41) on which no active material is coated, the second electrode uncoated portion (41) being at one axial end portion of the second electrode (4); and
an insulating coating layer (45) formed by coating a predetermined section from a boundary between the second electrode coated portion (42) and the second electrode uncoated portion (41) toward an end of the second electrode uncoated portion (41) with an insulation material, wherein the insulating coating layer (45) is thinner than the second electrode coated portion (42)
wherein the boundary between the second electrode coated portion (42) and the second electrode uncoated portion (41) is disposed axially further inward than an axial end of the separator (3), and
the second electrode uncoated portion (41) bends at a predetermined bent position (F) to a radial direction of the electrode assembly (1),
wherein the insulating coating layer (45) is extended axially further outward than the axial end of the separator (3),
wherein the bent position (F) is disposed axially further outward than the end of the separator (3),
wherein the insulating coating layer (45) covers at least a part of the section from the boundary between the second electrode coated portion (42) and the second electrode uncoated portion (41) toward the bent position (F) of the second electrode uncoated portion (41), and
wherein the insulating coating layer (45) does not cover the second electrode uncoated portion (41) by a predetermined gap (G) from the bent position (F) in the axial direction.

2. The cylindrical electrode assembly of claim 1, wherein the insulating coating layer (45) also covers a micro section (43) of an end of the second electrode coated portion (42) when covering the boundary between the second electrode coated portion (42) and the second electrode uncoated portion (41).

3. The cylindrical electrode assembly of claim 1, wherein the second electrode uncoated portion (41) is provided with a notch part (N) that is formed axially inward from the end of the second electrode uncoated portion (41),
a plurality of notch parts (N) is spaced from one another along a circumferential direction (a lengthwise direction) of the second electrode (4),
the second electrode uncoated portion disposed between two notch parts (N) that are adjacent each other in a circumferential direction defines a notch tab (T), and
the bent position (F) is disposed at a base end of the notch tab (T).

4. The cylindrical electrode assembly of claim 1, wherein the first electrode (2) is a positive electrode, and the second electrode (4) is a negative electrode.

5. The cylindrical electrode assembly of claim 1, wherein the first active material (23) is applied to both surfaces of the first electrode (2) to constitute the first electrode coated portion (22), and
wherein the second active material (46) is applied to both surfaces of the second electrode (4) to constitute a second electrode coated portion (42),
wherein the second electrode coated portion (42) is disposed to have a greater surface area in the axial direction than the first electrode coated portion (22) such that both axial ends of the second electrode coated portion (42) are extended and disposed axially further outward than both axial ends of the first electrode coated portion (22).

6. The cylindrical electrode assembly of claim 1, wherein a thickness of the second electrode (4) is thinner than a thickness of the first electrode (2).

7. The cylindrical electrode assembly of claim 1, wherein the first electrode (2) comprises a first electrode uncoated portion (21), which is an area at the other axial end of the first electrode (2) on which no active material is coated, and
buckling resistance of the second electrode uncoated portion (41) is less than buckling resistance of the first electrode uncoated portion (21),
wherein the magnitude of buckling resistance of the first electrode uncoated portion (21) and the second electrode uncoated portion (41) is determined based on Et³/ L²,
wherein L is the length of the section, t is the thickness of the electrode foil forming the respective first or second electrode (2, 4), and E is the elastic modules of the metal of the respective first or second electrode (2, 4).

8. The cylindrical electrode assembly of claim 1, wherein the first electrode (2) further includes a first electrode uncoated portion (21) on which no active material is coated, the first electrode uncoated portion (21) being at another axial end of the first electrode (2), and
an axial length of the second electrode uncoated portion (41) is greater than an axial length of the first electrode uncoated portion (21).

9. The cylindrical electrode assembly of claim 1, wherein the insulating coating layer (45) is coated on an area of the second electrode uncoated portion (41) having a curvature along a circumferential direction.

10. The cylindrical electrode assembly of claim 1, wherein the first electrode (2) is provided with an uncoated portion area on which a first active material (23) is not coated, and two or more electrode tabs (7) connect to the uncoated portion area.

11. A battery cell comprising the cylindrical electrode assembly (1) of any one of claims 1 to 10, and a battery can (301C) accommodating the electrode assembly (1).

12. The battery cell of claim 11, wherein the second electrode uncoated portion (41) welds to a second electrode current collecting plate (6) or directly welds to a bottom (301F) of the battery can (301C) or a cap (307).

## Patentansprüche

1. Zylindrische Elektrodenbaugruppe (1), in der eine erste Elektrode (2) und eine zweite Elektrode (4) in einem Zustand gewickelt sind, in dem die erste Elektrode (2) und die zweite Elektrode (4) mit einem Separator (3) dazwischen geschichtet sind,
wobei die erste Elektrode (2) einen ersten beschichteten Elektrodenabschnitt (22) aufweist, wobei der erste beschichteten Elektrodenabschnitt (22) ein erstes aktives Material aufweist, das auf eine Oberfläche der ersten Elektrode (2) beschichtet ist,
wobei die zweite Elektrode (4) aufweist:
einen zweiten beschichteten Elektrodenabschnitt (42), der ein zweites aktives Material (46) aufweist, das auf eine Oberfläche der zweiten Elektrode (4) beschichtet ist;
einen zweiten unbeschichteten Elektrodenabschnitt (41), auf den kein aktives Material beschichtet ist, wobei der zweite unbeschichtete Elektrodenabschnitt (41) an einem axialen Endabschnitt der zweiten Elektrode (4) ist; und
eine Isolierbeschichtungsschicht (45), die durch Beschichten eines vorbestimmten Abschnitts von einer Grenze zwischen dem zweiten beschichteten Elektrodenabschnitt (42) und dem zweiten unbeschichteten Elektrodenabschnitt (41) in Richtung eines Endes des zweiten unbeschichteten Elektrodenabschnitts (41) mit einem Isoliermaterial gebildet ist, wobei die Isolierbeschichtungsschicht (45) dünner ist als der zweite beschichtete Elektrodenabschnitt (42),
wobei die Grenze zwischen dem zweiten beschichteten Elektrodenabschnitt (42) und dem zweiten unbeschichteten Elektrodenabschnitt (41) axial weiter innen angeordnet ist als ein axiales Ende des Separators (3), und
der zweite unbeschichtete Elektrodenabschnitt (41) biegt sich an einer vorbestimmten Biegeposition (F) zu einer radialen Richtung der Elektrodenanordnung (1),
wobei die Isolierbeschichtungsschicht (45) sich axial weiter nach außen erstreckt als das axiale Ende des Separators (3),
wobei die Biegeposition (F) axial weiter außen angeordnet ist als das Ende des Separators (3),
wobei die Isolierbeschichtungsschicht (45) zumindest einen Teil des Abschnitts von der Grenze zwischen dem zweiten beschichteten Elektrodenabschnitt (42) und dem zweiten unbeschichteten Elektrodenabschnitt (41) in Richtung der Biegeposition (F) des zweiten unbeschichteten Elektrodenabschnitts (41) abdeckt, und
wobei die Isolierbeschichtungsschicht (45) den zweiten unbeschichteten Elektrodenabschnitt (41) über einen vorbestimmten Spalt (G) von der Biegeposition (F) in der axialen Richtung nicht abdeckt.

2. Zylindrische Elektrodenbaugruppe nach Anspruch 1, wobei die Isolierbeschichtungsschicht (45) auch einen Mikroabschnitt (43) eines Endes des zweiten beschichteten Elektrodenabschnitts (42) abdeckt, wenn sie die Grenze zwischen dem zweiten beschichteten Elektrodenabschnitt (42) und dem zweiten unbeschichteten Elektrodenabschnitt (41) abdeckt.

3. Zylindrische Elektrodenbaugruppe nach Anspruch 1, wobei der zweite unbeschichtete Elektrodenabschnitt (41) mit einem Kerbteil (N) versehen ist, das von dem Ende des zweiten unbeschichteten Elektrodenabschnitts (41) axial nach innen ausgebildet ist,
wobei eine Vielzahl von Kerbteilen (N) entlang einer Umfangsrichtung (einer Längsrichtung) der zweiten Elektrode (4) voneinander beabstandet sind,
wobei der zweite unbeschichtete Elektrodenabschnitt, der zwischen zwei Kerbteilen (N) angeordnet ist, die in einer Umfangsrichtung zueinander benachbart sind, eine Kerblasche (T) definiert, und
wobei die Biegeposition (F) an einem Basisende der Kerblasche (T) angeordnet ist.

4. Zylindrische Elektrodenbaugruppe nach Anspruch 1, wobei die erste Elektrode (2) eine positive Elektrode ist und wobei die zweite Elektrode (4) eine negative Elektrode ist.

5. Zylindrische Elektrodenbaugruppe nach Anspruch 1, wobei das erste aktive Material (23) auf beiden Oberflächen der ersten Elektrode (2) aufgebracht ist, um den ersten beschichteten Elektrodenabschnitt (22) zu bilden, und
wobei das zweite aktive Material (46) auf beiden Oberflächen der zweiten Elektrode (4) aufgebracht ist, um einen zweiten beschichteten Elektrodenabschnitt (42) zu bilden,
wobei der zweite beschichtete Elektrodenabschnitt (42) so angeordnet ist, dass er eine größere Oberfläche in der axialen Richtung aufweist als der erste beschichtete Elektrodenabschnitt (22), so dass beide axialen Enden des zweiten beschichteten Elektrodenabschnitts (42) sich axial weiter nach außen erstrecken und angeordnet sind als beide axialen Enden des ersten beschichteten Elektrodenabschnitts (22).

6. Zylindrische Elektrodenbaugruppe nach Anspruch 1, wobei eine Dicke der zweiten Elektrode (4) dünner ist als eine Dicke der ersten Elektrode (2).

7. Zylindrische Elektrodenbaugruppe nach Anspruch 1, wobei die erste Elektrode (2) einen ersten unbeschichteten Elektrodenabschnitt (21) umfasst, der eine Fläche an dem anderen axialen Ende der ersten Elektrode (2) ist, auf die kein aktives Material beschichtet ist, und
wobei ein Knickwiderstand des zweiten unbeschichteten Elektrodenabschnitts (41) geringer ist als ein Knickwiderstand des ersten unbeschichteten Elektrodenabschnitts (21),
wobei die Größe des Knickwiderstands des ersten unbeschichteten Elektrodenabschnitts (21) und des zweiten unbeschichteten Elektrodenabschnitts (41) basierend auf Et³/L² bestimmt wird,
wobei L die Länge des Abschnitts ist, t die Dicke der Elektrodenfolie ist, die die jeweilige erste oder zweite Elektrode (2, 4) bildet, und E das Elastizitätsmodul des Metalls der jeweiligen ersten oder zweiten Elektrode (2, 4) ist.

8. Zylindrische Elektrodenbaugruppe nach Anspruch 1, wobei die erste Elektrode (2) ferner einen ersten unbeschichteten Elektrodenabschnitt (21) aufweist, auf den kein aktives Material beschichtet ist, wobei der erste unbeschichtete Elektrodenabschnitt (21) an einem anderen axialen Ende der ersten Elektrode (2) ist, und
wobei eine axiale Länge des zweiten unbeschichteten Elektrodenabschnitts (41) größer ist als eine axiale Länge des ersten unbeschichteten Elektrodenabschnitts (21).

9. Zylindrische Elektrodenbaugruppe nach Anspruch 1, wobei die Isolierbeschichtungsschicht (45) auf einen Bereich des zweiten unbeschichteten Elektrodenabschnitts (41) aufgebracht ist, der eine Krümmung entlang einer Umfangsrichtung aufweist.

10. Zylindrische Elektrodenbaugruppe nach Anspruch 1, wobei die erste Elektrode (2) mit einem unbeschichteten Abschnittsbereich versehen ist, auf den ein erstes aktives Material (23) nicht beschichtet ist, und zwei oder mehr Elektrodenlaschen (7) mit dem unbeschichteten Abschnittsbereich verbunden sind.

11. Batteriezelle, umfassend die zylindrische Elektrodenbaugruppe (1) nach einem der Ansprüche 1 bis 10 und ein Batteriegehäuse (301C), das die Elektrodenbaugruppe (1) aufnimmt.

12. Batteriezelle nach Anspruch 11, wobei der zweite unbeschichtete Elektrodenabschnitt (41) an eine zweite Elektrodenstromsammelplatte (6) angeschweißt oder direkt an einen Boden (301F) des Batteriegehäuses (301C) oder eine Kappe (307) angeschweißt ist.

## Revendications

1. Ensemble d'électrodes cylindrique (1) dans lequel une première électrode (2) et une deuxième électrode (4) sont enroulées dans un état où la première électrode (2) et la deuxième électrode (4) sont empilées avec un séparateur (3) entre elles,
la première électrode (2) comprenant une partie revêtue de première électrode (22), la partie revêtue de première électrode (22) comprenant une première matière active enrobée sur une surface de la première électrode (2),
la deuxième électrode (4) comprenant :
une partie revêtue de deuxième électrode (42) comportant une deuxième matière active (46) enrobée sur une surface de la deuxième électrode (4) ;
une partie non revêtue de deuxième électrode (41) sur laquelle aucune matière active n'est enrobée, la partie non revêtue de deuxième électrode (41) se trouvant sur une partie d'extrémité axiale de la deuxième électrode (4) ; et
une couche de revêtement isolant (45) formée en revêtant une section prédéterminée à partir d'une limite entre la partie revêtue de deuxième électrode (42) et la partie non revêtue de deuxième électrode (41) vers une extrémité de la partie non revêtue de deuxième électrode (41) avec une matière isolante, la couche de revêtement isolant (45) étant plus mince que la partie revêtue de deuxième électrode (42)
la limite entre la partie revêtue de deuxième électrode (42) et la partie non revêtue de deuxième électrode (41) étant disposée, dans le sens axial, davantage vers l'intérieur qu'une extrémité axiale du séparateur (3), et
la partie non revêtue de deuxième électrode (41) se courbant dans une position courbée prédéterminée (F) dans le sens radial de l'ensemble d'électrodes (1),
la couche de revêtement isolant (45) s'étendant, dans le sens axial, davantage vers l'extérieur que l'extrémité axiale du séparateur (3),
la position courbée (F) étant disposée dans le sens axial davantage vers l'extérieur que l'extrémité du séparateur (3),
la couche de revêtement isolant (45) couvrant au moins une partie de la section allant de la limite entre la partie revêtue de deuxième électrode (42) et la partie non revêtue de deuxième électrode (41) vers la position courbée (F) de la partie non revêtue de deuxième électrode (41), et
la couche de revêtement isolant (45) ne couvrant pas la partie non revêtue de deuxième électrode (41) sur un écart prédéterminé (G) depuis la position courbée (F) dans le sens axial.

2. Ensemble d'électrodes cylindrique selon la revendication 1, la couche de revêtement isolant (45) couvrant également une micro-section (43) d'une extrémité de la partie revêtue de deuxième électrode (42) lorsqu'elle couvre la limite entre la partie revêtue de deuxième électrode (42) et la partie non revêtue de deuxième électrode (41).

3. Ensemble d'électrodes cylindrique selon la revendication 1, la partie non revêtue de deuxième électrode (41) étant pourvue d'un élément à encoche (N) formé vers l'intérieur dans le sens axial depuis une extrémité de la partie non revêtue de deuxième électrode (41),
une pluralité d'éléments à encoche (N) étant espacés les uns des autres dans une direction circonférentielle (dans le sens de la longueur) de la deuxième électrode (4),
la partie non revêtue de deuxième électrode disposée entre deux éléments à encoche (N) adjacents dans une direction circonférentielle définissant une languette d'encoche (T), et
la position courbée (F) étant disposée sur une extrémité de base de la languette d'encoche (T).

4. Ensemble d'électrodes cylindrique selon la revendication 1, la première électrode (2) étant une électrode positive et la deuxième électrode (4) étant une électrode négative.

5. Ensemble d'électrodes cylindrique selon la revendication 1, la première matière active (23) étant appliquée sur les deux surfaces de la première électrode (2) pour constituer la partie revêtue de première électrode (22), et
la deuxième matière active (46) étant appliquée sur les deux surfaces de la deuxième électrode (4) pour constituer une partie revêtue de deuxième électrode (42),
la partie revêtue de deuxième électrode (42) étant disposée de façon à présenter une superficie supérieure dans le sens axial que la partie revêtue de première électrode (22), de sorte que les deux extrémités axiales de la partie revêtue de deuxième électrode (42) soient étendues et disposées davantage vers l'extérieur dans le sens axial que les deux extrémités axiales de la partie revêtue de première électrode (22).

6. Ensemble d'électrodes cylindrique selon la revendication 1, une épaisseur de la deuxième électrode (4) étant inférieure à une épaisseur de la première électrode (2).

7. Ensemble d'électrodes cylindrique selon la revendication 1, la première électrode (2) comprenant une partie non revêtue de première électrode (21), à savoir une surface à l'autre extrémité axiale de la première électrode (2) sur laquelle aucune matière active n'a été appliquée, et
la résistance au flambage de la partie non revêtue de deuxième électrode (41) étant inférieure à la résistance au flambage de la partie non revêtue de première électrode (21),
la magnitude de la résistance au flambage de la partie non revêtue de première électrode (21) et de la partie non revêtue de deuxième électrode (41) étant déterminée d'après Et³/ L²,
L étant la longueur de la section, t étant l'épaisseur de la feuille d'électrode formant la première ou la deuxième électrode respective (2, 4), et E désignant les modules élastiques du métal de la première ou de la deuxième électrode respective (2, 4).

8. Ensemble d'électrodes cylindrique selon la revendication 1, la première électrode (2) comprenant en outre une partie non revêtue de première électrode (21) sur laquelle aucune matière active n'a été appliquée, la partie non revêtue de première électrode (21) se trouvant sur une autre extrémité axiale de la première électrode (2), et
une longueur axiale de la partie non revêtue de deuxième électrode (41) étant supérieure à une longueur axiale de la partie non revêtue de première électrode (21).

9. Ensemble d'électrodes cylindrique selon la revendication 1, la couche de revêtement isolant (45) étant appliquée sur une zone de la partie non revêtue de deuxième électrode (41) présentant une courbure dans le sens circonférentiel.

10. Ensemble d'électrodes cylindrique selon la revendication 1, la première électrode (2) étant agencée avec une surface de partie non revêtue sur laquelle une première matière active (23) n'a pas été appliquée, et deux ou plusieurs languettes d'électrode (7) se connectant à la surface de partie non revêtue.

11. Cellule de batterie comprenant l'ensemble d'électrodes cylindrique (1) selon une quelconque des revendications 1 à 10, et un boîtier de batterie (301C) accueillant l'ensemble d'électrodes (1).

12. Cellule de batterie selon la revendication 11, la partie non revêtue de deuxième électrode (41) se soudant soit à une plaque collectrice de courant de deuxième électrode (6) soit directement à un fond (301F) du boîtier de batterie (301C) ou d'un capuchon (307).
